# FASCICULE DE BREVET EUROPEEN

(11) **EP 1 420 203 B1**
(45) Date de publication et mention de la délivrance du brevet: **02.11.2006**
(21) Numéro de dépôt: 03292783.2
(22) Date de dépôt: 06.11.2003
(51) Int. Cl.: F16M 13/00

(54) **Support de carter pour moteur de véhicule automobile**
Tragvorrichtung für das Motorgehäuse eines Kraftfahrzeuges
Stand for engine housing of an automotive vehicle

(30) Priorité: 13.11.2002 FR 0214172
(43) Date de publication de la demande: 19.05.2004
(73) Titulaire: Renault s.a.s., 92100 Boulogne Billancourt (FR)
(72) Inventeur: Poussade, Roger, 92190 Meudon (FR)

(56) Documents cités:
- GB-A- 680 564
- US-A- 3 306 601
- US-A- 4 138 079
- US-A- 4 809 963

## Description

L'invention concerne un support de carter pour un moteur de véhicule automobile.

Ces supports sont notamment utilisés par des opérateurs sur les chaînes de montage des moteurs pour maintenir et supporter les carters contenant les moteurs. La forme d'un support dépend donc de la forme du carter qu'il doit supporter.

Les carters de moteur comprennent en général un corps destiné à recevoir le moteur et une face avant située du côté de l'accouplement de la boîte de vitesse au moteur.

La forme d'un corps de carter varie pour chaque famille de moteurs. Par ailleurs, dans une famille particulière de moteurs, la forme de la face avant du carter peut varier en fonction du type d'accouplement utilisé entre la boîte de vitesse et le moteur. Il existe donc un grand nombre de carters de formes différentes, ce qui implique un nombre tout aussi important de supports de carter.

Ainsi, sur une chaîne de montage, l'opérateur peut être amené à changer fréquemment de support en fonction du moteur. Il doit alors aller chercher le support adéquat chaque fois que nécessaire, ce qui constitue une perte de temps et une fatigue.

Par ailleurs, les supports de carter connus sont en général moulés d'une pièce en un matériau rigide, et présentent un poids relativement élevé afin d'être capables de supporter le poids du moteur, environ 150 kg, et celui de la boîte de vitesse, environ 50 kg. Leur poids avoisine ainsi souvent 5 kg et leur déplacement répétitif génère une fatigue importante pour l'opérateur.

L'invention vise à remédier à ces inconvénients en proposant un support de carter pouvant être utilisé pour des carters correspondants à une ou plusieurs familles de moteur. Les changements de support effectués par l'opérateur sont ainsi réduits de façon importante, ce qui permet un gain de temps et une diminution de la fatigue de l'opérateur.

A cet effet, l'objet de l'invention concerne un support de carter pour moteur, selon la revendication 1.

Un même support peut ainsi être utilisé pour différents carters présentant les mêmes points d'appui mais des faces différentes. Il suffit alors de choisir l'élément support de face adéquat. Ce dernier présentant des dimensions et un poids faibles par rapport au support de carter dans son ensemble, le confort de l'opérateur peut ainsi être amélioré. L'invention est également avantageuse économiquement lors de la réalisation de nouveaux carters pouvant être supportés par les mêmes points d'appui. Il n'est alors plus nécessaire de fabriquer de nouveaux supports, mais uniquement de nouveaux éléments supports de face.

Dans un mode de réalisation particulier, le support comprend au moins un élément support de face fixe et au moins un élément support de face mobile.

Dans une variante, chacun des éléments supports de face mobiles est mobile entre une position d'utilisation, dans laquelle il supporte la face avant du carter prédéterminé avec lequel il coopère, et une position de repos dans laquelle un autre élément support de face fixe ou mobile supporte la face avant d'un autre carter prédéterminé avec lequel il coopère. Cette position de repos peut être située sur le support ou à distance de celui-ci.

Encore dans une variante, les éléments supports de face mobiles comprennent des moyens de fixation et/ou de blocage sur ledit support de carter.

Dans un mode de réalisation, les éléments supports de face mobiles sont articulés au support de carter autour d'un axe de rotation fixe par rapport au support. L'opérateur n'a alors plus besoin de se déplacer pour changer les pièces adéquates, il lui suffit de placer l'élément de support correspondant au carter de moteur en position d'utilisation.

En particulier, les éléments supports de face mobiles peuvent comporter des trous oblongs pour le passage de l'axe de rotation.

Notamment, en position d'utilisation, les éléments supports de face mobiles peuvent prendre appui sur le support de carter, et les trous oblongs peuvent être situés de sorte que, en position d'utilisation, l'axe de rotation traverse les trous oblongs à leur extrémité distale du support de carter, et que, lors de la rotation de l'élément support amovible, l'axe de rotation traverse les trous oblongs à leur extrémité opposée. Les trous oblongs participent ainsi au blocage de l'élément support de face en position d'utilisation.

Encore dans une variante, les moyens de blocage consistent en des surfaces du support de carter en appui contre au moins une partie de la surface de l'élément support de face mobile dans la position d'utilisation et en des formes du support de carter coopérant avec des formes complémentaires dudit élément support en position d'utilisation.

Dans un autre mode de réalisation, les éléments supports de face mobiles sont fixés sur une partie amovible du support de carter. L'opérateur peut alors remplacer facilement la partie amovible en cas d'usure de cette dernière, ou pour mettre en place une autre partie amovible comportant des éléments supports de face coopérants avec d'autres carters.

L'invention est maintenant décrite en référence aux dessins annexés, non limitatifs, dans lesquels :
- la figure 1 est une vue en perspective d'un mode de réalisation d'un support de carter selon l'invention ;
- la figure 2 est une vue en perspective éclatée des éléments supports de face du mode de réalisation représenté figure 1.

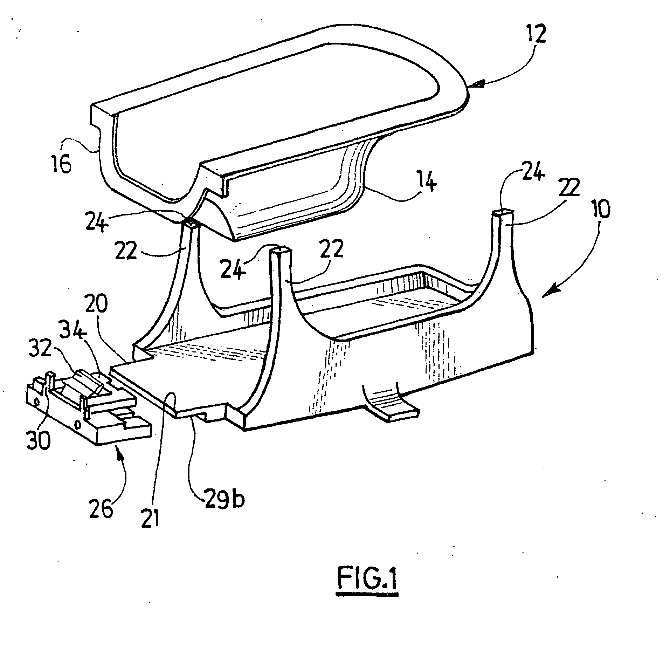

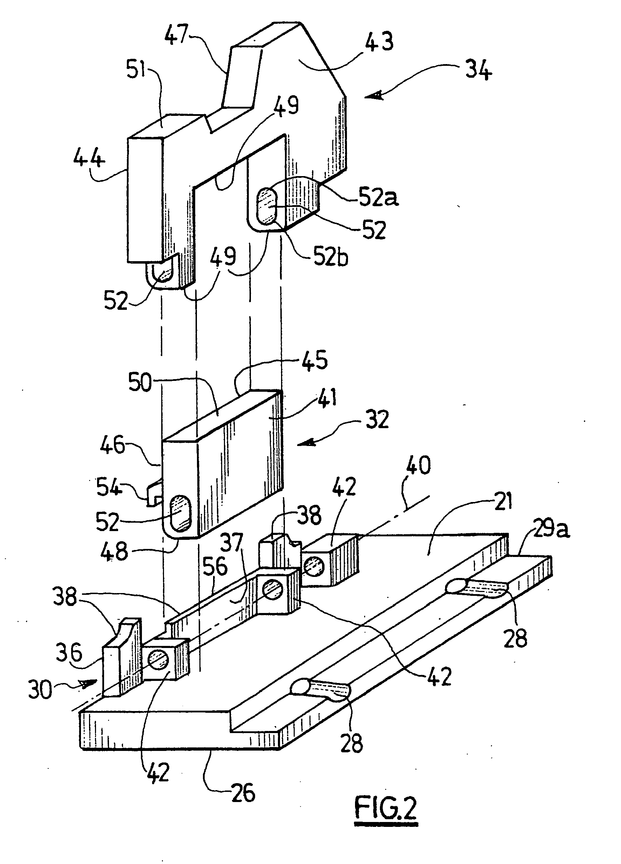

Un mode de réalisation d'un support de carter selon l'invention est décrit en référence aux figures 1 et 2. Sur les figures, les formes des pièces représentées ont été simplifiées à des fins de clarté.

Le support 10 est destiné à supporter un carter 12 de moteur. Le carter 12 comporte un corps 14 destiné à supporter le moteur (non représenté) et une face avant 16 située du côté de l'accouplement entre le moteur et la boîte de vitesse, lorsque le moteur est dans le carter.

Le support 10 comporte une plaque de base 20 plane et sensiblement rectangulaire sur laquelle le support 10 va reposer. Sur la face supérieure 21 de la plaque de base 20, opposée à la face sur laquelle elle repose en position d'utilisation, des points d'appui 22 saillent sensiblement perpendiculairement à la plaque 20 et sont répartis sur la périphérie de celle-ci. Chaque point d'appui 22 comprend, à distance de la plaque de base 20, une extrémité supérieure 24 destinée à supporter le corps 14 du carter 12. Ces extrémités 24 sont généralement en contact avec des vis du carter 12, elles doivent donc être particulièrement résistantes. A cet effet, on peut prévoir de les renforcer au moyen d'une pièce métallique (non représentée) sur laquelle la vis sera en contact. On peut par exemple utiliser une rondelle métallique mise en place au moment de la réalisation du support 10.

Le nombre de points d'appui 22 doit être suffisant pour empêcher le basculement du moteur. La forme et l'emplacement de ces points d'appui 22 sont choisis de façon à ce qu'ils puissent supporter les corps 14 de différents carters 12.

La plaque de base 20 comprend une partie amovible 26 à une de ses extrémités, sur laquelle sont situés des éléments supports de face décrits ci-après. Cette partie amovible 26 est, par exemple, fixée sur la plaque de base 20 au moyen de vis (non représentées). Ces vis sont introduites dans des alésages 28 de la partie amovible 26 et des alésages correspondants (non représentés) de la plaque de base 20. Ces alésages s'étendent dans le plan de la plaque de base 20. Un décrochement 29a réalisé dans l'épaisseur du bord de la partie amovible 26 venant en contact avec un décrochement complémentaire 29b réalisé dans le bord correspondant de la plaque 20 permet de faciliter le centrage et la mise en place de la partie amovible 26. Bien entendu, d'autres moyens de fixation peuvent être utilisés entre la plaque de base 20 et sa partie amovible 26.

Le support 10 comprend également plusieurs éléments de support de face 30, 32, 34, chacun de ces éléments coopérant avec et supportant une face avant 16 d'un carter 12 prédéterminé. Le support 10 peut ainsi être utilisé pour trois différents carters 12 correspondants chacun à un élément support de face 30, 32, 34. Ces derniers sont représentés pour plus de clarté non fixés sur la figure 2.

Ces éléments 30, 32, 34 sont situés sur la face supérieure 21 de la partie amovible 26 de la plaque de base 20. Mais selon une autre variante de l'invention, un élément de support est relié en permanence au support et est mobile entre une position d'utilisation, dans laquelle il maintient la face du carter, et une position escamotée, dans laquelle il ne sert pas.

L'un 30 de ces éléments support de face est fixe et solidaire du bord de la partie amovible 26 distal de la plaque de base 20. Il s'étend suivant un plan sensiblement perpendiculaire au plan de la plaque de base 20. Cet élément 30 se présente par exemple sous la forme d'une plaque 36, sensiblement verticale, présentant une surface supérieure sensiblement plane 38 prévue pour coopérer avec la face avant 16 du carter correspondant.

Les autres éléments supports de face 32 et 34 sont mobiles par articulation autour d'un axe de rotation 40. Cet axe 40 est fixé sur la partie amovible 26 par des éléments supports d'axe 42, par exemple au nombre de trois. Les éléments 40 sont répartis le long de la plaque 36 de l'élément support de face fixe 30, de manière que l'axe 40 s'étende suivant une direction parallèle au plan de la plaque 36 et parallèle au plan de la plaque de base 20.

Les éléments supports de face mobiles 32 et 34 se présentent sous la forme de plaques 44 et 46 respectivement, de forme polygonale.

En position d'utilisation, ces plaques 44, 46 s'étendent perpendiculairement au plan de la plaque de base 20 et parallèlement à l'élément support de face fixe 30. Dans cette position verticale, on définit pour chaque plaque 44, 46, une face latérale interne 41, 43 respectivement, dirigée vers le centre du support 10 et une face latérale externe 45, 47 respectivement, du côté opposé à la face latérale interne, une face inférieure 48, 49 respectivement, située en regard de la face supérieure 21 de la plaque de base 20, et une face supérieure 50, 51 respectivement, du côté opposé à la face inférieure.

Les faces supérieures 50, 51 sont prévues pour coopérer avec et supporter la face avant des carters respectifs des éléments 32, 34.

En position verticale d'utilisation, les éléments supports de face 32, 34 ont des dimensions telles que :
- une partie de leur surface latérale externe 45, 47 soit en contact avec la surface latérale 37 en regard de l'élément support de face fixe 30 qui sert alors de butée,
- leurs surfaces inférieures 48, 49 soient en contact avec et reposent sur la face supérieure 21 de la partie amovible 26.

En position de repos, les plaques 44 et 46 reposent à plat sur la plaque de support 20 : leur face latérale externe 41, 43 reposant sur la surface supérieure 21. L'élément support de face 34 est représenté dans cette position sur la figure 1.

Afin de permettre le passage de l'axe 40, les éléments supports de face 32, 34 comportent, à proximité de leurs surfaces inférieures respectives 48, 49, des trous oblongs 52 d'axe parallèle à leurs faces latérales interne 41, 43 et externe 45, 47 et parallèle à leurs faces inférieure 48, 49 et supérieure 50, 51. Ces trous oblongs 52 sont situés de manière que :
- en position d'utilisation, l'axe de rotation 40 traverse les trous oblongs à leur extrémité 52a distale de la partie amovible 26,
- lors de là rotation des éléments supports mobiles 32, 34, et dans leur position de repos, l'axe de rotation 40 soit situé à l'extrémité 52b opposée des trous oblongs.

Ainsi, en position d'utilisation, les éléments supports de face mobiles 32, 34 ne peuvent basculer autour de l'axe 40, leur face latérale externe étant en partie en appui sur l'élément support de face fixe 30.

L'angle entre la surface latérale externe 45, 47 et la surface inférieure 48, 49 des éléments de support 32, 34 peut être arrondi afin de faciliter leur rotation entre les positions de repos et d'utilisation.

Afin de renforcer leur blocage et leur maintien en position d'utilisation, chacun des éléments supports de face mobiles 32, 34 peut présenter sur sa face latérale externe 45, 47 respectivement, une partie 54 en saillie apte à coopérer avec la partie amovible 26. Il s'agit, tel que représenté par exemple sur la figure 2 pour l'élément 32, d'une surface 54 s'étendant parallèlement à la surface externe 45, à distance de cette dernière, de manière à former une rainure dirigée vers et de forme complémentaire de la partie supérieure 56 de l'élément support de face fixe 30. Cette dernière peut alors être emboîtée dans la rainure suivant la direction perpendiculaire à la plaque de base 20.

Bien entendu, d'autres moyens de blocage et de maintien des éléments supports de face mobiles peuvent être envisagés sans sortir du cadre de l'invention.

Dans le mode de réalisation représenté, un des éléments supports de face mobile 34 présente des dimensions supérieures à l'autre élément support de face mobile 32. Dans ce cas, afin de ne pas fragiliser l'élément support de face mobile 34 en position d'utilisation, tout en réduisant son encombrement et en économisant de la matière, l'élément support de face 32 présente une forme encastrable dans l'élément support de face mobile 34. Ainsi, en position d'utilisation de l'élément support de face mobile 34, une partie de la surface inférieure 49 de ce dernier est en appui sur la surface supérieure 50 de l'élément support de face 32. L'élément support de face 34 peut ainsi supporter sans faiblesse une pression verticale importante.

L'utilisation du support 10 représenté est décrite ci-après.

Lorsque le support 10 doit supporter un carter 12 correspondant à l'élément support de face 30, les éléments supports de face mobiles 32 et 34 sont alors rabattus contre la face supérieure 21 de la plaque de base 20 de manière à pas gêner la mise en place du carter.

Si un carter 12 correspondant à l'élément support de face 32 doit être supporté, on fait pivoter ce dernier autour de l'axe 40 jusqu'à la position verticale, l'axe 40 est alors situé dans la partie inférieure 52b du trou oblong. On exerce alors une poussée de haut en bas jusqu'à ce que la face inférieure 48 de l'élément 32 repose sur la plaque de base 20, l'axe 40 étant alors dans la partie supérieure 52a du trou oblong et la partie en saillie 54 étant emboîtée dans l'élément support de face fixe 30.

La mise en position d'utilisation de l'élément support de face 34 est analogue, l'élément support de face 32 est alors maintenu en place. Pour remettre ces éléments mobiles 32, 34 en position de repos, il suffit de les soulever, puis de les pivoter vers leur position de repos.

Le support 10 de carter décrit ci-dessus peut être réalisé en un matériau résistant moulé. La plaque de base 20 et les points d'appui 22 sont moulés en un bloc, la partie amovible 26 avec l'élément support de face fixe 30 et les supports d'axe 42 sont moulés en un bloc, chacun des éléments supports de face mobiles 32, 34 étant moulés séparément.

D'autres modes de réalisation non représentés peuvent être envisagés sans sortir du cadre de l'invention.

Par exemple, les éléments supports de face mobiles peuvent, en position de repos, être rabattus du côté opposé à celui représenté dans le mode de réalisation ci-dessus. Il suffit pour cela de déplacer l'axe de rotation 40 vers l'extérieur du support 10 de l'autre côté du support de face fixe 30, les moyens de blocage et de maintien étant alors disposés de préférence sur la face latérale interne 41, 43 des éléments supports de face 32, 34.

On peut également prévoir un plus grand nombre d'éléments supports de face mobiles. Le support 10 présente alors de préférence des surfaces ou des moyens permettant de bloquer ces éléments en position d'utilisation.

On peut également envisager que les différents éléments supports de face mobiles soient disposés côte à côte, les plaques les constituant étant par exemple dans un même plan et solidaires d'une partie montée à coulissement sur le support. Chaque élément support de face est alors placé en position d'utilisation en faisant coulisser l'ensemble par rapport au support de carter.

Dans d'autres modes de réalisation, la plaque de base 20 du support ne comporte pas de partie amovible, seuls les éléments supports de face étant mobiles.

On peut également prévoir un mode de réalisation dans lequel les éléments supports de face sont ôtés du support quand ils ne sont pas utilisés, par exemple en démontant l'axe de rotation ou en utilisant d'autres moyens de fixation, par encliquetage, emboîtement ou autre.

On peut également envisager que les points d'appui 22 soient amovibles, par exemple encliquetés dans la plaque de base 20. Il est alors possible de les changer lorsque des carters présentant des points d'appui 22 différents doivent être supportés successivement.

## Revendications

1. Support (10) de carter pour moteur, ledit carter (12) comprenant un corps (14) destiné à recevoir le moteur et une face avant (16) située du côté de l'accouplement du moteur à la boîte de vitesse, ledit support (10) comprenant une pluralité de points d'appui (22) pour soutenir le corps (14) du carter, comprenant une pluralité d'éléments supports de face (30, 32, 34), chaque élément support de face étant apte à coopérer avec et à supporter la face avant (16) d'un carter prédéterminé distinct du ou des autres carters prédéterminés, la pluralité de points d'appui (22) étant apte à empêcher seule le basculement du moteur et à supporter les corps (14) des différents carters prédéterminés,
**caractérisé en ce qu**'il comprend au moins un élément support de face fixe (30) et au moins un élément support de face mobile (32, 34), et en ce que les éléments supports de face mobiles (32, 34) sont articulés au support (10) de carter autour d'un axe de rotation (40) fixe par rapport au support (10).

2. Support selon la revendication 1, **caractérisé en ce que** chaque élément support de face mobile (32, 34) est mobile entre une position d'utilisation, dans laquelle il supporte la face avant (16) du carter prédéterminé avec lequel il coopère, et une position de repos dans laquelle un autre élément support de face fixe (30) ou mobile (34, 32) supporte la face avant (16) d'un autre carter prédéterminé avec lequel il coopère.

3. Support selon l'une des revendications 1 ou 2, **caractérisé en ce que** les éléments supports de face mobiles (32, 34) comprennent des moyens de fixation et/ou de blocage sur ledit support (10) de carter.

4. Support selon l'une des revendications 1 à 3, **caractérisé en ce que** les éléments supports de face mobiles (32, 34) comportent des trous oblongs (52) pour le passage de l'axe de rotation (40).

5. Support selon la revendication 4, **caractérisé en ce que**, en position d'utilisation, les éléments supports de face mobiles (32, 34) prennent appui sur le support (10) de carter, et **en ce que** les trous oblongs (52) sont situés de sorte que, en position d'utilisation, l'axe de rotation (40) traverse les trous oblongs (52) à leur extrémité (52a) distale du support (10) de carter, et que, lors de la rotation de l'élément support de face mobile (32, 34), l'axe de rotation (40) traverse les trous oblongs (52) à leur extrémité (52b) opposée.

6. Support selon l'une des revendications 3 à 5, **caractérisé en ce que** les moyens de blocage consistent en des surfaces du support (10) de carter en appui contre au moins une partie de la surface de l'élément support de face mobile (32, 34) dans la position d'utilisation et en des formes du support (10) de carter coopérant avec des formes complémentaires dudit élément support de face (32, 34) en position d'utilisation.

7. Support selon l'une des revendications 1 à 6, **caractérisé en ce que** les éléments supports de face (30, 32, 34) sont fixés sur une partie amovible (26) du support (10) de carter.

8. Support selon les revendications 1 à 6, **caractérisé en ce qu**'au moins un élément de support de face est relié en permanence au support et est mobile entre une position d'utilisation et une position escamotée dans laquelle il ne sert pas.

9. Support selon l'une des revendications 1 à 7, **caractérisé en ce que** les extrémités (24) des points d'appui (22) en contact avec le carter sont renforcées par une pièce métallique.

## Claims

1. Engine crankcase support (10), the said crankcase (12) comprising a body (14) designed to receive the engine and a front face (16) situated on the side of the coupling of the engine to the gearbox, the said support (10) comprising a plurality of resting points (22) to support the body (14) of the crankcase, comprising a plurality of face support elements (30, 32, 34), each face support element being capable of interacting with and supporting the front face (16) of a predetermined crankcase distinct from the other predetermined crankcase(s), the plurality of resting points (22) being capable of preventing only the tipping of the engine and of supporting the bodies (14) of the various predetermined crankcases,
**characterized in that** it comprises at least one fixed face support element (30), and at least one movable face support element (32, 34), and **in that** the movable face support elements (32, 34) are articulated on the support (10) of the crankcase about a rotation shaft (40) that is fixed relative to the support (10).

2. Support according to Claim 1, **characterized in that** each movable face support element (32, 34) can be moved between a position of use, in which it supports the front face (16) of the predetermined crankcase with which it interacts, and a rest position in which another fixed face support element (30) or movable face support element (34, 32) supports the front face (16) of another predetermined crankcase with which it interacts.

3. Support according to one of Claims 1 or 2, **characterized in that** the movable face support elements (32, 34) comprise means of attachment to and/or of immobilization on the said crankcase support (10).

4. Support according to one of Claims 1 to 3, **characterized in that** the movable face support elements (32, 34) comprise oblong holes (52) for the rotation shaft (40) to pass through.

5. Support according to Claim 4, **characterized in that**, in the position of use, the movable face support elements (32, 34) rest on the crankcase support (10), and **in that** the oblong holes (52) are situated such that, in the position of use, the rotation shaft (40) passes through the oblong holes (52) at their distal end (52a) of the crankcase support (10), and that, during the rotation of the movable face support element (32, 34), the rotation shaft (40) passes through the oblong holes (52) at their opposite end (52b).

6. Support according to one of Claims 3 to 5, **characterized in that** the immobilization means consist of the surfaces of the crankcase support (10) resting against at least one portion of the surface of the movable face support element (32, 34) in the position of use and of forms of the crankcase support (10) interacting with matching forms of the said face support element (32, 34) in the position of use.

7. Support according to one of Claims 1 to 6, **characterized in that** the face support elements (30, 32, 34) are attached to a removable portion (26) of the crankcase support (10).

8. Support according to Claims 1 to 6, **characterized in that** at least one face support element is permanently connected to the support and can be moved between a position of use and a retracted position in which it is not used.

9. Support according to one of Claims 1 to 7, **characterized in that** the ends (24) of the resting points (22) in contact with the crankcase are reinforced by a metal part.

## Patentansprüche

1. Tragvorrichtung (10) für ein Motorgehäuse, wobei das Gehäuse (12) einen Körper (14), der dazu bestimmt ist, den Motor aufzunehmen, und eine Vorderseite (16) umfasst, die sich auf der Seite der Kopplung des Motors mit dem Getriebe befindet, wobei die Tragvorrichtung (10) eine Vielzahl von Abstützungspunkten (22) umfasst, um den Körper (14) des Gehäuses zu unterstützen, umfassend eine Vielzahl von vorderen Tragelementen (30, 32, 34), wobei jedes vordere Tragelement mit der Vorderseite (16) eines vorbestimmten Gehäuses, das sich von dem oder den anderen vorbestimmten Gehäusen unterscheidet, zusammenwirken oder diese unterstützen kann, wobei die Vielzahl von Abstützungspunkten (22) alleine das Kippen des Motors verhindern und die Körper (14) der verschiedenen vorbestimmten Gehäuse unterstützen kann,
**dadurch gekennzeichnet, dass** sie mindestens ein festes vorderes Tragelement (30) und mindestens ein bewegliches vorderes Tragelement (32, 34) umfasst, und dass die beweglichen vorderen Tragelemente (32, 34) an der Tragvorrichtung (10) des Gehäuses um eine Drehachse (40), die in Bezug auf die Tragvorrichtung (10) fest ist, angelenkt sind.

2. Tragvorrichtung nach Anspruch 1, **dadurch gekennzeichnet, dass** jedes bewegliche vordere Tragelement (32, 34) zwischen einer Verwendungsposition, in der es die Vorderseite (16) des vorbestimmten Gehäuses, mit dem es zusammenwirkt, und einer Ruheposition, in der ein anderes festes (30) oder bewegliches (34, 32) vorderes Tragelement die Vorderseite (16) eines weiteren vorbestimmten Gehäuses, mit dem es zusammenwirkt, beweglich ist.

3. Tragvorrichtung nach einem der Ansprüche 1 oder 2, **dadurch gekennzeichnet, dass** die beweglichen vorderen Tragelemente (32, 34) Mittel zur Befestigung und/oder Feststellung auf der Tragvorrichtung (10) des Gehäuses umfassen.

4. Tragvorrichtung nach einem der Ansprüche 1 bis 3, **dadurch gekennzeichnet, dass** die beweglichen vorderen Tragelemente (32, 34) Langlöcher (52) für den Durchgang der Drehachse (40) umfassen.

5. Tragvorrichtung nach Anspruch 4, **dadurch gekennzeichnet, dass** in der Verwendungsposition die beweglichen vorderen Tragelemente (32, 34) auf der Tragvorrichtung (10) des Gehäuses aufliegen, und dass die Langlöcher (52) derart angeordnet sind, dass in Verwendungsposition die Drehachse (40) durch die Langlöcher (52) an ihrem distalen Ende (52a) der Tragvorrichtung (10) des Gehäuses verläuft, und dass bei der Drehung des beweglichen vorderen Tragelements (32, 34) die Drehachse (40) durch die Langlöcher (52) an ihrem gegenüber liegenden Ende (52b) verläuft.

6. Tragvorrichtung nach einem der Ansprüche 3 bis 5, **dadurch gekennzeichnet, dass** die Feststellmittel in Tragflächen (10) des Gehäuses bestehen, die auf mindestens einem Teil der Oberfläche des beweglichen vorderen Tragelements (32, 34) in der Verwendungsposition aufliegen, und in Formen der Gehäusetragvorrichtung (10) bestehen, die mit komplementären Formen des vorderen Tragelements (32, 34) in Verwendungsposition zusammenwirken.

7. Tragvorrichtung nach einem der Ansprüche 1 bis 6, **dadurch gekennzeichnet, dass** die vorderen Tragelemente (30, 32, 34) auf einem abnehmbaren Teil (26) der Tragvorrichtung (10) des Gehäuses befestigt sind.

8. Tragvorrichtung nach den Ansprüchen 1 bis 6, **dadurch gekennzeichnet, dass** mindestens ein vorderes Tragelement ständig mit der Tragvorrichtung verbunden und zwischen einer Verwendungsposition und einer eingezogenen Position, in der es keine Funktion hat, beweglich ist.

9. Tragvorrichtung nach einem der Ansprüche 1 bis 7, **dadurch gekennzeichnet, dass** die Enden (24) der Abstützungspunkte (22) in Kontakt mit dem Gehäuse durch ein metallisches Stück verstärkt sind.
